# EUROPEAN PATENT APPLICATION

(11) **EP 4 106 310 A1**
(43) Date of publication of application: **21.12.2022**
(21) Application number: 22165320.7
(22) Date of filing: 30.03.2022
(51) Int. Cl.: H04N 5/225, B60R 1/00, B60R 11/04

(54) **FRONT COVER OF VEHICLE-MOUNTED CAMERA, VEHICLE-MOUNTED CAMERA DEVICE, AND VEHICLE**

(30) Priority: 16.06.2021 CN 202110666230
(71) Applicant: Nio Technology (Anhui) Co., Ltd, Hefei City, Anhui 230601 (CN)
(72) Inventor: KONG, Henry, AnTing Town, Jiading Shanghai (CN); CHEN, Yongji, AnTing Town, Jiading Shanghai (CN); HU, Xuqiang, AnTing Town, Jiading Shanghai (CN); FANG, Ruifang, AnTing Town, Jiading Shanghai (CN); GONG, Xiaoning, AnTing Town, Jiading Shanghai (CN); FU, Dazhong, AnTing Town, Jiading Shanghai (CN)
(74) Representative: Patentwerk B.V.

(57) **Abstract**

The disclosure relates to a front cover of a vehicle-mounted camera, a vehicle-mounted camera device, and a vehicle. The front cover of a vehicle-mounted camera includes: a lens assembly, having a lens mount and a lens set including at least one lens; and a cover body, having an end surface in abutting joint with the lens mount and a through mounting hole, wherein the lens set is inserted in the mounting hole with a clearance reserved therebetween, such that the lens mount fixedly abuts against the end surface by means of a connecting medium, and an inner wall of the mounting hole and/or an outer wall of the lens set is provided with an accommodating portion, thus the connecting medium fills the accommodating portion and is wedged between the lens set and the mounting hole.

## Description

### Technical Field

The disclosure relates to vehicle vision sensor hardware technologies, and in particular to a front cover of a vehicle-mounted camera, a vehicle-mounted camera device, and a vehicle with the vehicle-mounted camera device.

### Background Art

In order to meet technical requirements of current development of ADAS (Advanced Driver Assistance Systems) (or unmanned driving), a growing number of vehicles are equipped with high-precision camera modules to detect driving environments of the vehicles. For an automotive camera component, the higher the precision or resolution of a lens used, the higher the sensitivity of Spatial Frequency Resolution (SFR) of the camera component (or, the more likely it is to be affected to change, resulting in that the camera component cannot work normally in a corresponding application field).

### Summary of the Disclosure

The disclosure provides a lens mounting and fastening solution adaptable to a vehicle-mounted high-precision camera device, which can maintain stability of SFR of the on-board high-precision camera device.

According to an aspect of the disclosure, a front cover of a vehicle-mounted camera is provided, including:
a lens assembly, having a lens mount and a lens set including at least one lens; and
a cover body, having an end surface in abutting joint with the lens mount and a through mounting hole,
wherein the lens set is inserted in the mounting hole with a clearance reserved therebetween, such that the lens mount fixedly abuts against the end surface by means of a connecting medium, and an inner wall of the mounting hole and/or an outer wall of the lens set is provided with an accommodating portion, thus the connecting medium fills the accommodating portion and is wedged between the lens set and the mounting hole.

According to another aspect of the disclosure, a vehicle-mounted camera device is provided, including a housing, and an electronic circuit assembly fixedly disposed in the housing, wherein the electronic circuit assembly includes a circuit board and an optical sensor fastened on the circuit board, the housing including the front cover of a vehicle-mounted camera as described according to any one of embodiments of the disclosure, and the electronic circuit assembly is fixedly mounted at the front cover.

According to still another aspect of the disclosure, a vehicle is provided, including a situational awareness sensor system, the situational awareness sensor system including the front cover of a vehicle-mounted camera or the vehicle-mounted camera device according to any one of embodiments of the disclosure.

Solution 1: A front cover of a vehicle-mounted camera is characterized by including:
a lens assembly, having a lens mount and a lens set including at least one lens; and
a cover body, having an end surface in abutting joint with the lens mount and a through mounting hole,
wherein the lens set is inserted in the mounting hole with a clearance reserved therebetween, such that the lens mount fixedly abuts against the end surface by means of a connecting medium, and an inner wall of the mounting hole and/or an outer wall of the lens set is provided with an accommodating portion, thus the connecting medium fills the accommodating portion and is wedged between the lens set and the mounting hole.

Solution 2: The front cover of a vehicle-mounted camera according to solution 1 is characterized in that the connecting medium is constructed as a cure glue in such a manner that the glue having not cured can be filled into the clearance between the lens assembly and the cover body and the accommodating portion under a combined action of gravity and siphoning.

Solution 3: The front cover of a vehicle-mounted camera according to solution 1 is characterized in that the accommodating portion is constructed to include a plurality of accommodating grooves.

Solution 4: The front cover of a vehicle-mounted camera according to solution 3 is characterized in that the accommodating grooves are distributed along an axial direction of the lens assembly and/or the mounting hole.

Solution 5: The front cover of a vehicle-mounted camera according to solution 3 is characterized in that the accommodating portions or the accommodating grooves are uniformly distributed along a circumferential direction of the lens assembly and/or the mounting hole.

Solution 6: The front cover of a vehicle-mounted camera according to solution 3 is characterized in that when the lens set and the mounting hole are both provided with the accommodating grooves, the accommodating grooves of the lens set and the accommodating grooves of the mounting hole are at least partially disposed in axially and/or circumferentially corresponding positions.

Solution 7: The front cover of a vehicle-mounted camera according to solution 3 is characterized in that the accommodating grooves are disposed in a through manner along a circumferential direction of the lens set and/or the mounting hole.

Solution 8: The front cover of a vehicle-mounted camera according to solution 3 is characterized in that a bottom of the accommodating portion or the accommodating groove is chamfered or rounded.

Solution 9: The front cover of a vehicle-mounted camera according to solution 1 is characterized in that an abutting surface, directed toward the end surface, of the lens mount and/or the end surface is provided with a rough-textured portion.

Solution 10: The front cover of a vehicle-mounted camera according to solution 1 is characterized in that the end surface is constructed to have a groove surrounding the mounting hole, and the connecting medium between the lens mount and the end surface is embedded in the groove.

Solution 11: The front cover of a vehicle-mounted camera according to solution 1 is characterized in that the accommodating portion is helically constructed on the inner wall of the mounting hole and/or the outer wall of the lens set.

Solution 12: The front cover of a vehicle-mounted camera according to solution 1 is characterized in that the lens mount is constructed as a flange portion radially protruding from the lens set.

Solution 13: A vehicle-mounted camera device includes a housing, and an electronic circuit assembly fixedly disposed in the housing, wherein the electronic circuit assembly includes a circuit board and an optical sensor fastened on the circuit board. The onboard camera device is characterized in that the housing includes the front cover of a vehicle-mounted camera as described according to any one of solutions 1 to 12, wherein the electronic circuit assembly is fixedly mounted at the front cover.

Solution 14: A vehicle includes a situational awareness sensor system is characterized in that the situational awareness sensor system includes the front cover of a vehicle-mounted camera according to any one of the solutions 1 to 12 or the vehicle-mounted camera device according to the solution 13.

### Brief Description of the Drawings

The above and other objectives and advantages of the disclosure will be more thorough and clearer from the following detailed description in conjunction with the drawings, where the same or similar elements are represented by the same reference numerals.
Fig. 1 illustrates a mounting solution of a front cover of a vehicle-mounted camera in the prior art; and
Fig. 2 is a longitudinal sectional view exemplarily illustrating a mounting solution of a front cover of a vehicle-mounted camera disclosed in the disclosure.

### Detailed Description of Embodiments

For the sake of brevity and illustrative purposes, the principles of the disclosure are mainly described herein with reference to its exemplary embodiments. However, those skilled in the art can easily appreciate that the same principle can be equivalently applied to all types of front cover of a vehicle-mounted cameras or vehicle-mounted camera devices, and a same or similar principle can be implemented. These variations do not depart from the true spirit and scope of the disclosure.

The disclosure relates to a lens mounting technology for a high-precision lens device, and is intended to ensure that SFR of the high-precision camera device achieves the required stability in a vehicle application environment.

With the continuous development of the sensor technology and data processing technology, an automotive-grade camera sensor has higher precision. When the precision or resolution of a lens of the camera device reaches a certain level (e.g., 8 million pixels or more), an SFR curve of the camera device is extremely sensitive to small changes in various parameters of the device. In other words, some small changes of the camera device may cause a change of the SFR, thereby affecting normal operation of the camera device. The problems described above may not even occur in a normal vehicle camera device (with less resolution or precision). During design verification of such a high-precision camera device, the applicant finds that after a certain period of cycle (e.g., 500 hours) of an environmental test, the SFR of the camera device became no longer stable, hindering the normal operation of the camera device. In order to find out the reason why the SFR is no longer stable, the applicant systematically controls various variables (e.g., parameters of a combined lens, a structural strength of a PCB (Printed Circuit Board), a position of the PCB itself, and a position of a lens relative to a camera housing) of the device to carry out lots of experiments, and then finds that small (e.g., on the order of 10 microns or less) changes in the position of a high-precision lens set in a camera assembly cause the SFR of the entire camera assembly to vary beyond a tolerance range, thereby affecting normal imaging. After investigation, it is found that this small changes in the position of the lens set is caused by a small loosening of the fastening between the lens set and the camera device housing.

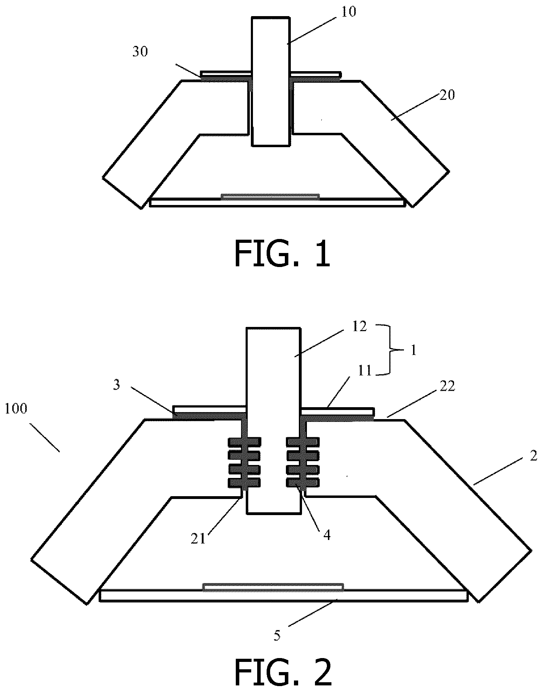

As shown in Fig. 1, in the prior art, a lens set 10 and a camera device housing (a front cover) 20 are connected by a special glue 30 only on the planes facing each other. This connection structure is prone to slight loosening when exposed to an external environment for a long time, resulting in instability of the SFR of the camera device.

Therefore, in order to solve or at least improve the above technical problem to a certain extent, that is, the problem that the SFR of the high-precision camera device is easy to be unstable after AA (active alignment) is carried out, the disclosure provides a front cover of a vehicle-mounted camera, wherein a high-precision lens set is precisely and firmly fastened in the front cover.

Referring to Fig. 2, a front cover of a vehicle-mounted camera 100 disclosed in the disclosure includes a lens assembly 1 and a cover body 2. Specifically, the lens assembly 1 includes a lens mount 11 and a lens set 12 having at least one lens, wherein the lens mount 11 and the lens set 12 can be integrally manufactured or fastened together by a mechanical connection. The cover body 2 is provided with a through mounting hole 21 and used for mounting the lens set 12. When the lens set 12 is inserted into the mounting hole 21 of the cover body 2 with a clearance reserved therebetween (there is a radial clearance between a periphery of the lens set and an inner wall of the mounting hole), the lens mount 11 may be fixedly abutted against an end surface 22 of the cover body 2 by means of a connecting medium 3, such as a special glue, so that the lens assembly 1 is fastened to the cover body 2. Within the scope of the disclosure, in order to enable the lens set 12 to be more precisely and firmly fastened at the cover body 2, the following settings can be made: the periphery or outer wall of a part (i.e., the lens set) of the lens assembly 1 inserted in the mounting hole 21, and/or the inner wall of the mounting hole 21 is provided with an accommodating portion 4 for accommodating the connecting medium 3 (e.g., the special glue) that is filled between the lens set and the mounting hole, and the connecting medium 3 can be wedged between the lens assembly and the cover body after curing, thereby fastening the lens assembly 1 more firmly.

Within the scope of the disclosure, the concept "the connecting medium 3 can be wedged between the lens assembly 1 and the cover body 2" is to be understood as follows: especially for the connecting medium 3 between the lens set 12 and the mounting hole 21, after being stabilized (that is, after curing), it has one or more parts that pass through an outer wall surface of the lens set 12 in a branch-like manner to be embedded in the lens set 12 and/or pass through an inner wall surface of the mounting hole 21 to be embedded in the cover body (e.g., referring to Fig. 2). Compared with a manner that the connecting medium 3 only acts on a surface between the lens mount and the end surface of the cover body or only acts on a wall surface between the lens set 12 and the mounting hole 21, a wedged structure of the connecting medium 3 can significantly improve connection firmness between the lens assembly and the cover body, and even can avoid small change of position in a case of, for example, being applied with a severe pressure fluctuation.

In some embodiments of the disclosure, the accommodating portion 4 described above may be constructed as an integral accommodating recess (e.g., an accommodating groove) or constructed to include a plurality of accommodating grooves 4. Each of the accommodating grooves 4 can be filled with the connecting medium 3, so that the connecting medium 3 forms the wedged structure after curing.

Optionally, the plurality of accommodating grooves 4 may be distributed along an axial direction of the lens set 12 and/or the mounting hole 21, and preferably uniformly distributed. Herein, the axial direction refers to a longitudinal direction of the lens set 12 or the mounting hole 21. Further optionally, the plurality of accommodating grooves 4 may be distributed along a circumferential direction of the lens set 12 and/or the mounting hole 21, and preferably uniformly distributed, so that the connecting medium 3 can be evenly embedded into the lens set 12 or the mounting hole 21 in the circumferential direction.

It should be noted that the disclosure does not limit a shape structure or longitudinal sectional shape of the accommodating groove 4 or the accommodating portion 4. In other words, any shape of the accommodating groove 4 in which the connecting medium 3 can be conveniently filled and cure to form the wedged structure falls within the scope of protection of the disclosure. For example, the accommodating groove 4 with a longitudinal section being rectangular, triangular, trapezoidal or the like may be provided.

In some embodiments of the disclosure, when both the outer wall of the lens set 12 and the inner wall of the mounting hole 21 are provided with the accommodating portions or accommodating grooves 4, the accommodating portions or accommodating grooves 4 may be respectively distributed at positions where the lens set 12 and the mounting hole 21 corresponds to each other axially and/or circumferentially. That is, the accommodating portion or accommodating grooves 4 in the outer wall of the lens set 12 and the accommodating portion or accommodating grooves 4 in the inner wall of the mounting hole 21 at least partially overlap or correspond to each other in their axial positions and/or circumferential positions. This arrangement manner can help the connecting medium 3 to play its role of fastening and connecting the lens assembly and the cover body.

Optionally, the accommodating grooves 4 may also be arranged by circumferentially penetrating a peripheral surface of the lens set 12 or the inner wall surface of the mounting hole 21. In this case, the accommodating groove 4 is constructed as, for example, a groove with an annular cross-section, such that the connecting medium 3 can form the wedged structure in the entire circumference of the lens set 12 or the mounting hole 21.

In some embodiments of the disclosure, it is also feasible that the accommodating portion 4 is constructed helically (e.g., thread-like) around the lens set 12 or the mounting hole 21. For example, the accommodating portion 4 having a thread-like structure can be arranged on both the outer wall surface of the lens set 12 and the inner wall surface of the mounting hole 21. However, threads provided at these two portions do not engage with each other and there is also a radial clearance. The connecting medium 3 can then be filled between such thread-like structures and form the above-mentioned wedged structure between the lens set 12 and the mounting hole 21 after curing.

In order to enable the connecting medium 3 to be more fully filled into the accommodating portion or the accommodating groove 4, it may be considered that a bottom of the accommodating portion or accommodating groove 4 is provided with a structure such as chamfered or a rounded corner. Herein, the bottom of the accommodating portion or accommodating groove 4 refers to a portion opposite to an opening of the accommodating portion or accommodating groove 4. This structure avoids the problem that the connecting medium 3 is difficult to flow to a "dead corner" of the accommodating portion or accommodating groove 4. Optionally, it is also feasible that a groove surrounding the mounting hole 21 of the cover body is constructed at the end surface (that is, a surface directed toward the lens mount and is fixedly connected to the lens mount through the connecting medium) of the cover body; similar to the accommodating portion 4 or the accommodating groove described above, the groove provided at the end surface can also be filled with the connecting medium, and make the connecting medium embedded between the lens mount and the end surface after the connecting medium cures, thereby strengthening a connection between the lens mount and the end surface. It is also feasible that the lens mount is designed as a flange portion 11 radially protruding from the lens set 12, and the flange portion 11 plays a role of being fixedly connected to the end surface of the cover body. Compared with the entire lens mount, the flange portion reduces the volume and mass of the camera front cover, optimizes spatial layout of the camera front cover on the vehicle, and can also better meet requirements for light weight.

Optionally, roughening treatment ( roughness increasing) can also be performed on the end surface of the cover body and/or a surface of the lens mount (or the flange portion) opposite to the end surface of the cover body, so as to strengthen the connection and fixation of the connecting medium.

It should be noted that, within the scope of the disclosure, it can be considered of using a glue commonly used in the mounting of the high-precision camera or any other material that can achieve the same functional effect as the cure connecting medium. Such a cure connecting medium is required to have not only an adhesive force as needed, but also a certain viscosity, so that it can flow and fill the clearance between the lens set 12 and the mounting hole 21 and the accommodating portion 4 (the accommodating groove) under a combined action of gravity and siphon effect, and if necessary, can also flow to fill the groove provided on the end surface of the cover body, without dripping down only under the action of gravity. For example, a special glue material for electronics, having a dynamic viscosity of about 32,000 m Pa·s, can be used. While, it is also possible to consider using any other electronic special glue that can achieve the above functions, and these materials all fall within the scope of protection of the disclosure.

The disclosure also relates to a vehicle-mounted camera device, which includes a lens assembly, a housing, and an electronic circuit assembly arranged in the housing. Specifically, the electronic circuit assembly includes a circuit board (PCB) and an optical sensor fastened on the circuit board. Especially for a high-precision vehicle camera device, a lens set in the lens assembly needs to be precisely and firmly positioned relative to the optical sensor, so as to ensure normal operation of the camera device. Within the scope of the disclosure, the precise positioning mentioned above can be achieved as follows: the lens assembly and the housing are fastened as in the embodiment of the front cover 100 described in any of the above embodiments of the disclosure. That is, the lens assembly 1 can be precisely and firmly fastened at the front cover 100 by means of the above-mentioned connecting medium 3 and the specific accommodating portion 4, while the electronic circuit assembly 5 can be connected and fastened to the front cover 100 by screwing, for example. In addition to the front cover, the housing may also include, for example, a sealing ring and a back cover, wherein the front cover and the back cover are sealed and fastened together by the sealing ring, so that the lens assembly and the housing form a strictly sealed cavity, with the electronic circuit assembly fastened therein.

The foregoing descriptions are merely the embodiments of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the embodiments of the disclosure and features in the embodiments may also be combined with each another. The scope of protection of the disclosure shall be subject to recitations of the claims.

## Claims

1. A front cover of a vehicle-mounted camera, comprising:
a lens assembly, having a lens mount and a lens set comprising at least one lens; and
a cover body, having an end surface in abutting joint with the lens mount and a through mounting hole,
wherein the lens set is inserted in the mounting hole with a clearance reserved therebetween, such that the lens mount fixedly abuts against the end surface by means of a connecting medium, and an inner wall of the mounting hole and/or an outer wall of the lens set is provided with an accommodating portion, thus the connecting medium fills the accommodating portion and is wedged between the lens set and the mounting hole.

2. The front cover of a vehicle-mounted camera according to claim 1, wherein the connecting medium is constructed as a cure glue in such a manner that the glue having not cured can be filled into the clearance between the lens assembly and the cover body and the accommodating portion under a combined action of gravity and siphoning.

3. The front cover of a vehicle-mounted camera according to claim 1, wherein the accommodating portion is constructed to comprise a plurality of accommodating grooves.

4. The front cover of a vehicle-mounted camera according to claim 3, wherein the accommodating grooves are distributed along an axial direction of the lens assembly and/or the mounting hole.

5. The front cover of a vehicle-mounted camera according to claim 3, wherein the accommodating portions or the accommodating grooves are uniformly distributed along a circumferential direction of the lens assembly and/or the mounting hole.

6. The front cover of a vehicle-mounted camera according to claim 3, wherein when the lens set and the mounting hole are both provided with the accommodating grooves, the accommodating grooves of the lens set and the accommodating grooves of the mounting hole are at least partially disposed in axially and/or circumferentially corresponding positions.

7. The front cover of a vehicle-mounted camera according to claim 3, wherein the accommodating grooves are disposed in a through manner along a circumferential direction of the lens set and/or the mounting hole.

8. The front cover of a vehicle-mounted camera according to claim 3, wherein a bottom of the accommodating portion or the accommodating groove is chamfered or rounded.

9. The front cover of a vehicle-mounted camera according to claim 1, wherein an abutting surface, directed toward the end surface, of the lens mount and/or the end surface is provided with a rough-textured portion.

10. The front cover of a vehicle-mounted camera according to claim 1, wherein the end surface is constructed to have a groove surrounding the mounting hole, and the connecting medium between the lens mount and the end surface is embedded in the groove.
